(19) Europäisches Patentamt
European Patent Office
Office européen des brevets

(11) **EP 2 789 082 B1**

(12) **EUROPÄISCHE PATENTSCHRIFT**

(45) Veröffentlichungstag und Bekanntmachung des Hinweises auf die Patenterteilung:
**24.07.2019   Patentblatt 2019/30**

(51) Int Cl.:
***H02K 41/03*** *(2006.01)*

(21) Anmeldenummer: **12801515.3**

(22) Anmeldetag: **03.12.2012**

(86) Internationale Anmeldenummer:
**PCT/EP2012/074217**

(87) Internationale Veröffentlichungsnummer:
**WO 2013/083514 (13.06.2013 Gazette 2013/24)**

(54) **LINEAR-SYNCHRONMOTOR**

LINEAR SYNCHRONOUS MOTOR

MOTEUR LINÉAIRE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2011   DE 102011056249**

(43) Veröffentlichungstag der Anmeldung:
**15.10.2014   Patentblatt 2014/42**

(73) Patentinhaber: **thyssenkrupp Elevator AG 45143 Essen (DE)**

(72) Erfinder:
• **LÖSER, Friedrich Riemerling 85521 (DE)**
• **ZHENG, Qinghua München 80331 (DE)**

(74) Vertreter: **thyssenkrupp Intellectual Property GmbH ThyssenKrupp Allee 1 45143 Essen (DE)**

(56) Entgegenhaltungen:
**WO-A2-2009/132729     US-A1- 2011 062 901 US-B1- 6 476 524**

**Beschreibung**

Die Erfindung betrifft einen Linear-Synchronmotor mit einem Spulenwicklungen aufweisenden Langstator und einem Läufer, der in Längsrichtung des Linear-Synchronmotors eine Vielzahl von aufeinanderfolgenden Magneten aufweist, wobei der Langstator aus einer Vielzahl von Langstatorabschnitten gebildet ist, die jeweils mehrere in Längsrichtung aufeinanderfolgende Spulenwicklungen aufweisen und durch Spalte voneinander getrennt sind. Die Erfindung betrifft auch bevorzugte Verwendungen des Linear-Synchronmotors.

Linear-Synchronmotoren werden in der Praxis als Antriebe für verschiedenste Anwendungszwecke und in unterschiedlichsten Dimensionierungen eingesetzt. Neben linear angetriebenen Zustelleinrichtungen in Werkzeugmaschinen oder Positioniersystemen werden Linear-Synchronmotoren auch für Transportsysteme wie Magnetschwebebahnen eingesetzt.

Insbesondere bei kurzen Stellwegen werden Kurzstator-Linearmotore eingesetzt, bei denen der Fahrweg als ortsfeste Komponente mit wechselweise gepolten Magneten ausgerüstet ist. Das Primärteil des Motors wird dann von Antriebswicklungen der bewegten Komponente, beispielsweise des entlang eines Fahrweges bewegten Fahrzeuges gebildet. Bei Linear-Antrieben in Werkzeugmaschinen werden üblicherweise Kurzstator-Linearmotoren eingesetzt, wobei das zum Vortrieb vorgesehene Wechselfeld beispielsweise mit einem beweglichen Kabel der bewegten Komponente zugeführt werden kann. Ein Kurzstator-Linearmotor ist beispielsweise aus der EP 1 056 187 A1 bekannt. Bei Kurzstator-Linearmotoren, die lediglich einen kleinen Stellweg aufweisen, wird die mit Magneten belegte ortsfeste Komponente häufig als ein einziges, zusammenhängendes Teil gefertigt.

Wenn jedoch größere Strecken bei hohen Geschwindigkeiten überbrückt werden sollen, werden in der Praxis Langstator-Synchronmotore eingesetzt. So ist ein Linear-Synchronmotor mit einem Spulenwicklungen aufweisenden Langstator und einem Läufer aus der Zeitschrift ZEVrail, Sonderheft Oktober 2003, Seiten 10 bis 16 bekannt. Bei einem solchen Langstator-Synchronmotor wird der Langstator als ortsfeste Komponente in Teilstücken gefertigt und dann zusammengesetzt. Auch wenn die Anordnung dieser Langstatorabschnitte mit einer sehr großen Genauigkeit erfolgt, sind über die gesamte Motorstrecke lokale Störstellen nicht zu vermeiden. So sind zwischen den in Längsrichtung aufeinanderfolgenden Langstatorabschnitten Spalte vorgesehen, welche notwendig sind, um die Langstatorabschnitte zu montieren, zu warten und auszutauschen sowie Dehnungen und Verformungen ausgleichen zu können, welche beispielsweise auf eine thermische Längenänderung oder eine Bewegung der Stützkonstruktion zurückzuführen sind. Durch die Spalte ergibt sich hinsichtlich der ansonsten äquidistanten Anordnung der Spulenwicklungen des Langstators eine Abweichung, welche bei dem Betrieb des Linear-Synchronmotors zu Kraftschwankungen führt, die auch als Kraftwelligkeit bezeichnet wird. Derartige Kraftschwankungen können in Form von Schlägen oder Vibrationen zu erheblichen Komforteinbußen führen, wobei auch erhöhte mechanische und elektrische Belastungen des Motors auftreten.

Um derartige Störungen gering zu halten, wird versucht die Spalte zwischen aufeinanderfolgenden Langstatorabschnitten durch eine Optimierung der Konstruktion so gering wie möglich zu halten. Die beschriebenen Kraftschwankungen können aber auch bei einem sehr großen konstruktiven Aufwand nicht völlig eliminiert werden.

Die WO 2009/146821 A1 beschäftigt sich mit der Reduzierung von Kraftschwankungen bei einem Linear-Synchronmotor, wobei eine elektronische Steuerung zur Kompensation vorgeschlagen wird. Durch eine solche elektronische Kompensation können die auf die Geometrie des Linear-Synchronmotors beruhende Kraftschwankungen unterdrückt werden, weshalb die Geometrie unverändert beibehalten werden kann.

Die US 3 712 240 A beschreibt einen gattungsfremden asynchronen Motor, bei dem als sekundäres Element einfache leitende Platten, beispielsweise Aluminiumplatten vorgesehen sind. Um einen gleichmäßigen Antrieb zu ermöglichen, soll der Grad der Bedeckung zwischen Primärelementen und Sekundärelementen stets gleich sein. Gemäß der US 3 712 240 sind keine Magnete vorgesehen, so dass sich das Problem einer von einzelnen Magneten hervorgerufenen Kraftfälligkeit nicht stellt.

Die US 2011/062901 A1 offenbart einen Linear-Synchronmotor gemäß dem Oberbegriff des Anspruchs 1, siehe Figur 3A.

Vor diesem Hintergrund liegt der vorliegenden Erfindung die Aufgabe zugrunde, einen Linear-Synchronmotor mit einem Spulenwicklungen aufweisenden Langstator und einem Läufer anzugeben, bei dem zwischen aufeinanderfolgenden Langstatorabschnitten Spalte verbleiben und wobei gleichzeitig übermäßige Kraftschwankungen durch die Spalte vermieden werden.

Ausgehend von einem Linear-Synchronmotor mit den eingangs beschriebenen Merkmalen wird die Aufgabe erfindungsgemäß durch einen Linear-Synchronmotor gemäß Anspruch 1 gelöst. Erfindungsgemäß ist über eine Vielzahl von aufeinanderfolgenden Langstatorabschnitten, vorzugsweise über den gesamten Langstator, die Gesamtlänge $L_G$ von jeweils einem Langstatorabschnitt und einem daran angrenzenden Spalt konstant, wobei die über sämtliche Magnete des Läufers in Längsrichtung gemessene Länge $L_L$ ein ganzzahliges Vielfaches der Gesamtlänge $L_G$ ist. Es gilt damit folgende Beziehung:

$$L_L = n * L_G = n * (L_A + d)$$

wobei n eine natürliche Zahl, d. h. eine ganze Zahl größer 0 ist, wobei $L_A$ die Länge eines Langstatorabschnittes und d die Breite eines zugehörigen Spaltes ist.

Sobald bei einer Bewegung das hintere Ende des Läufers, d. h. der in Bewegungsrichtung letzte Magnet, den Bereich eines Spaltes verlässt, gelangt das vordere Ende des Läufers, d. h. der in Bewegungsrichtung erste Magnet des Läufers, in den Bereich eines weiteren Spaltes. Die Anzahl n entspricht damit also auch der Zahl der Spalte, die sich unmittelbar unterhalb des Läufers befinden. Die Spalte können, müssen aber nicht, Luftspalte sein. Als Spalt wird im Rahmen der Erfindung allgemein ein Abschnitt bezeichnet, der frei von Spulenwicklung ist, wobei die aufeinanderfolgenden Spulenwicklungen innerhalb eines Langstatorabschnittes bezogen auf ihre Mitte oder einen anderen Referenzpunkt üblicherweise äquidistant angeordnet sind. Wenn die einzelnen Langstatorabschnitte als voneinander getrennte, einzeln montierbare Module ausgeführt sind, sind die Spalte Luftspalte, sofern sie nicht mit einem Material, beispielsweise einer nachgiebigen Dichtung, ausgefüllt sind. Es ist aber auch denkbar, dass an bestimmten Abschnitten des gesamten Langstators, d. h. des gesamten Fahrweges, längere Module eingesetzt werden sollen. So kann der Langstator auch voneinander getrennte, einzeln montierbare Module aufweisen, die zumindest zwei Langstatorabschnitte mit einem dazwischen angeordneten Spalt aufweisen. Bei einem solchen Spalt handelt es sich dann lediglich um einen Bereich, der frei von Spulenwicklungen ist, wobei das Modul selbst hier nicht unterbrochen ist. Ausschlaggebend ist im Rahmen der Erfindung, dass die zuvor beschriebenen Längenverhältnisse eingehalten werden.

Vorzugsweise sind die beschriebenen Längenverhältnisse entlang des gesamten Langstators verwirklicht. Insbesondere bei einer sehr großen Länge, beispielsweise bei einer Ausgestaltung als Magnetschwebebahn, können diese Bedingungen aber unter Umständen nicht immer eingehalten werden, beispielsweise im Bereich von Kurven, Abzweigungen oder sonstigen Übergängen. Wenn also in derartigen Bereichen von einer gleichbleibenden Gesamtlänge $L_G$ von jeweils einem Langstatorabschnitt und einem daran angrenzenden Spalt abgewichen werden muss, kann die Belastung des Linear-Synchronmotors auf andere Weise gering gehalten werden, falls dies notwendig ist. So kann beispielsweise in diesen Bereichen die Antriebsgeschwindigkeit reduziert werden.

Im Rahmen der Erfindung ist es möglich Spalte zwischen den Langstatorabschnitten vorzusehen, ohne dass dadurch übermäßige Kraftschwankungen bei dem Betrieb des Linear-Synchronmotors entstehen. Diese Spalte erlauben eine leichte klemmfreie Montage sowie eine Ausdehnung der Langstatorabschnitte bei einer Erwärmung. Entsprechend der Änderung der Länge $L_A$ der Langstatorabschnitte wird die Länge der zwischen den Langstatorabschnitten verbleibenden Spalte verändert, so dass erfindungsgemäß die Gesamtlänge $L_G$ gleich bleibt. Allerdings soll die Länge d der Spalte im Rahmen der Erfindung auf ein Maß beschränkt werden, welches gerade dazu notwendig ist, eine klemmfreie Montage und Demontage sowie einen Ausgleich von Längenänderungen zu ermöglichen. Trotz der erfindungsgemäßen Längenabstimmung verbleibt nämlich eine geringe Reststörung, welche auch mit zunehmender Spaltbreite ansteigt. Erfindungsgemäß ist die in Längsrichtung gemessene Länge der Spalte zwischen den aufeinanderfolgenden Langstatorabschnitten kleiner als die Hälfte des Abstandes von aufeinanderfolgenden Magneten, die von der jeweiligen Mitte der Magnete zu bestimmen ist. Dadurch kann sichergestellt werden, dass die auftretenden Schwankungen üblicherweise auf die Länge etwa eines Magneten bzw. auf den Überhang zweier aufeinanderfolgenden Magnete beschränkt sind.

Gemäß einer bevorzugten Ausgestaltung der Erfindung weisen die Magnete des Läufers in Längsrichtung gesehen eine abwechselnde Polung auf. Gemäß der üblichen Ausgestaltung eines Linear-Synchronmotors ist die Polausrichtung der Magnete senkrecht zu dem Tragspalt zwischen Langstator und Läufer.

Wenn dann gemäß einer weiteren bevorzugten Ausgestaltung der Erfindung der Läufer eine gerade Zahl an Magneten aufweist, sind der bei einer Bewegung des Läufers in Bewegungsrichtung erste Magnet sowie der letzte Magnet entgegengesetzt gepolt. Auch diese entgegengesetzte Polung trägt dazu bei, dass die bei dem Überfahren von Spalten resultierenden Schwankungen an dem in Bewegungsrichtung gesehen vorderen Ende des Läufers sowie an dem hinteren Ende des Läufers sich weitgehend gegeneinander aufheben.

Je nach Anwendungsfall können die Magnete des Läufers Permanentmagnete aus einem magnetischen Material oder Elektromagnete sein. Auch bei einer Ausgestaltung als Elektromagnete werden diese in der Regel mit einem in etwa gleichbleibenden Gleichstrom beaufschlagt, um ein gleichmäßiges Erregerfeld zu gewährleisten.

Ausgehend von einer mittleren Feldstärke ist üblicherweise eine Änderung der Spulenströme der Elektromagnete vorgesehen, um zwischen dem Langstator und dem Läufer einen gleichbleibenden Tragspalt bereitzuhalten. Zur Überwachung des Tragspaltes werden in der Praxis Spaltsensoren eingesetzt, wobei der Tragspalt bei einer Magnetschwebebahn üblicherweise etwa 10 mm beträgt.

Insbesondere wenn kein geregeltes Erregerfeld notwendig ist, können auch Permanentmagnete an dem Läufer vorgesehen sein. Schließlich ist auch eine Kombination von Permanentmagneten und Elektromagneten denkbar, wobei die Permanentmagnete hinsichtlich der Tragfunktion eine Grundlast übernehmen und wobei durch die Elektromagnete eine bedarfsgerechte Anpassung möglich ist.

Gegenstand der Erfindung ist auch die Verwendung des beschriebenen Linear-Synchronmotors für eine Magnetschwebebahn. Der Langstator bildet dann den Fahrweg, wobei der Läufer Teil des Magnetschwebefahrzeugs ist.

Eine alternative Verwendung des Linear-Synchronmotors sieht den Einsatz als Antrieb eines Aufzuges innerhalb eines Gebäudes vor. Bei dem Aufzug handelt es sich insbesondere um einen Lasten- oder Personenaufzug. Gerade wenn in Hochhäusern oder anderen Bauwerken große Höhen überwunden werden sollen, ist es zweckmäßig, den Langstator nicht aus einem einzigen Stück sondern aus Langstatorabschnitten zu bilden. Des Weiteren wird mit zunehmender Höhe auch eine vergleichsweise große Geschwindigkeit des Aufzuges angestrebt, wobei gerade dann Kraftschwankungen, die auch als Kraftwelligkeit bezeichnet werden, nachteilig sind. Schließlich ist der Läufer bei dem Einsatz des Linear-Synchronmotors in einem Aufzug relativ kurz, so dass Kraftschwankungen an einzelnen Magneten zu einer erheblichen Störung führen können. Gerade bei der Verwendung des Linear-Synchronmotors für einen Aufzug innerhalb eines Gebäudes ist die erfindungsgemäße Längenanpassung bzw. -segmentierung des Langstators deshalb zweckmäßig.

Zwei Ausführungsbeispiele eines Linear-Synchronmotors werden anhand der folgenden Zeichnungen erläutert. Es zeigen:

Fig. 1    eine schematische Ansicht eines Linear-Synchronmotors,
Fig. 2    eine Variante des in Fig. 1 dargestellten Linear-Synchronmotors.

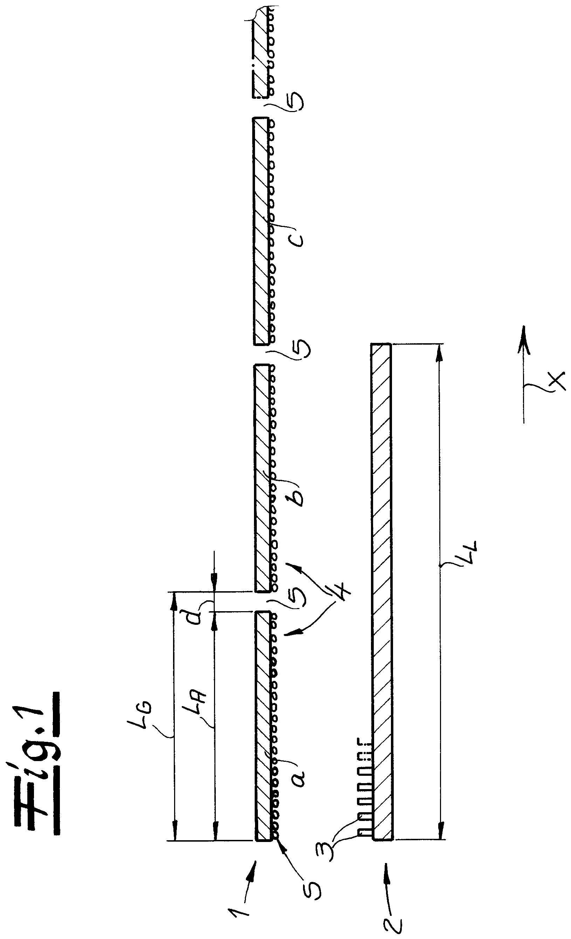

Die Fig. 1 zeigt in einer schematischen Darstellung einen Linear-Synchronmotor mit einem lediglich in einem Abschnitt dargestellten Langstator 1 der äquidistante Spulenwicklungen S aufweist. Bei dem Langstator 1 kann es sich beispielsweise um den Fahrweg einer Magnetschwebebahn oder ein stationäres Antriebselement eines von dem Linear-Synchronmotor angetriebenen Fahrstuhls handeln.

Der Linear-Synchronmotor umfasst des Weiteren einen Läufer 2, der in Längsrichtung des Linear-Synchronmotors eine Vielzahl von aufeinanderfolgenden Magneten 3 aufweist. Der Langstator 1 bildet also das ortsfeste Primärteil, während der bewegliche Läufer 2 das Sekundärteil des Linear-Synchronmotors bildet. Bei einer Magnetschwebebahn ist der Läufer 2 also Teil des Fahrzeuges, welches entlang des Langstators 1 als Fahrweg bewegt wird.

Der Linear-Synchronmotor ist für große Längen ausgelegt, weshalb der Langstator 1 aus einer Vielzahl von Langstatorabschnitten 4 gebildet ist, die jeweils als separate Module a, b, c hergestellt und montiert sind. Die Langstatorabschnitte 4 weisen jeweils mehrere in Längsrichtung x aufeinanderfolgende Spulenwicklungen S auf, wobei diese Spulenwicklungen S entlang der einzelnen Magnete 3 als in einer Querrichtung verlaufende Leiter ausgebildet sein können, die bei einer Beaufschlagung mit Wechselspannung ein entlang des Langstators 1 fortlaufendes Feld erzeugen und so den Läufer 2 bewegen.

Dadurch dass der Langstator 1 aus einer Vielzahl von Langstatorabschnitten 4 zusammengesetzt ist, kann dieser auch eine sehr große Länge aufweisen. Um die einzelnen Langstatorabschnitte 4 leicht montieren, warten und demontieren zu können und um den Ausgleich von Längenänderungen zu ermöglichen, sind zwischen den Langstatorabschnitten 4 Spalte 5 vorgesehen. Die Gesamtlänge $L_G$ von jeweils einem Langstatorabschnitt 4 mit der Länge $L_A$ und einem daran angrenzenden Spalt mit der Länge d ist entlang mehrere Langstatorabschnitte 4, vorzugsweise entlang des gesamten Langstators 1, konstant. Wenn sich beispielsweise die Länge $L_A$ der Langstatorabschnitte 4 aufgrund einer thermischen Ausdehnung erhöht, nimmt die Länge d der Spalte 5 entsprechend ab. Zu berücksichtigen ist dabei neben der Umgebungstemperatur auch die Abwärme der Spulenwicklungen S bei Betrieb des Linear-Synchronmotors.

Der Fig. 1 ist auch zu entnehmen, dass die über sämtliche Magnete 3 des Läufers 2 gemessene Länge $L_L$ des Läufers ein ganzzahliges Vielfaches der Gesamtlänge $L_G$ ist. In dem dargestellten Ausführungsbeispiel ist die Länge $L_L$ des Läufers 2 doppelt so groß wie die Gesamtlänge $L_G$.

Im Rahmen der beschrieben Ausgestaltung wird erreicht, dass entlang des Läufers 2 als Sekundärteil stets zwei Spalte 5 angeordnet sind. Wenn der in Bewegungsrichtung x am hinteren Ende des Läufers 2 angeordnete Magnet 3 den Bereich eines Spaltes 5 verlässt, gelangt das vordere Ende des Läufers 2, d. h. der in Bewegungsrichtung erste Magnet 3, in den Bereich eines weiteren Spaltes 5. Dadurch wird erreicht, dass die bei dem Überfahren der Spalte 5 auftretenden Kraftschwankungen, die auch als Kraftwelligkeit bezeichnet werden, sich bei dem Betrieb des Linear-Synchronmotors weitgehend aufheben. Dazu trägt auch bei, dass der in Bewegungsrichtung gesehen erste Magnet 3 sowie der in Bewegungsrichtung gesehene letzte Magnet 3 eine entgegengesetzte Polung aufweisen. Dies wird dadurch erreicht, dass die Magnete 3 des Läufers 2 in Längsrichtung x gesehen eine abwechselnde Polung aufweisen, wobei der Läufer 2 auch eine gerade Anzahl an Magneten 3 umfasst.

Bei den Magneten 3 des Läufers kann es sich um Elektromagnete oder Permanentmagnete handeln. Schließlich ist auch eine Kombination der beiden Magnettypen möglich, wobei Elektromagnete auch eine Steuerung der Feldstärke ermöglichen, beispielsweise um einen Tragspalt zwischen Langstator 1 und Läufer 2 regeln zu können.

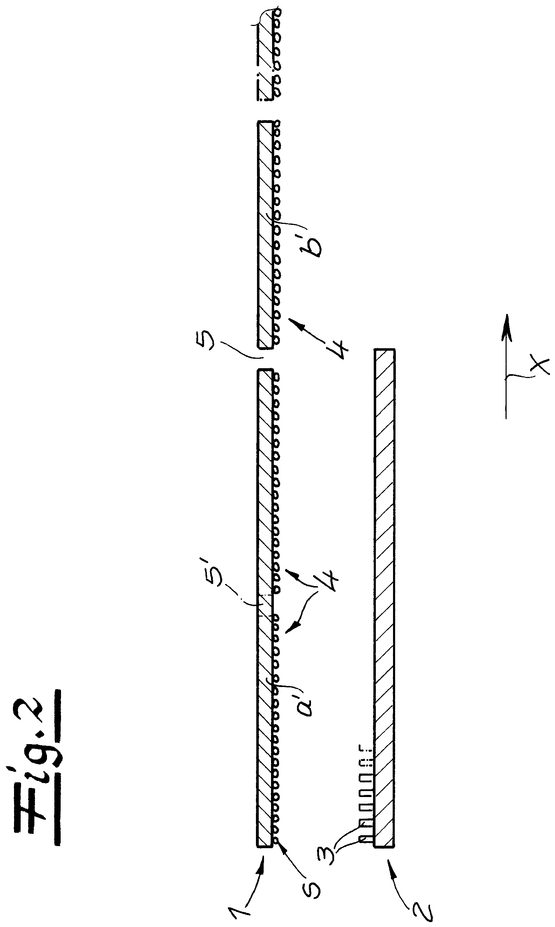

Bei dem Ausführungsbeispiel gemäß der Fig. 1 sind die einzelnen Langstatorabschnitte 4 als Module a, b, c durch einen Luftspalt voneinander getrennt. Je nach Anwendungsfall kann es aber zweckmäßig sein, längere Module bzw. Module mit einer unterschiedlichen Länge vorzusehen. Diese Module mit einer erhöhten Länge weisen dann mehrere Langstatorabschnitte 4 auf, die jeweils durch einen Spalt 5 voneinander getrennt sind. So zeigt die Fig. 2 eine Ausgestaltung mit zwei unterschiedlichen Modulen a' und b', wobei das zweite Modul b' wie die in der Fig. 1 dargestellten Module a, b, c ausgeführt ist. Das andere in der Fig. 2 dargestellte Modul a' ist jedoch von zwei Langstatorabschnitten 4 mit einem dazwischen verbleibenden Spalt 5' gebildet. Als Spalt 5, 5' wird damit allgemein ein Bereich bezeichnet, der frei von den Spulenwicklungen S ist. So zeigt die Fig. 2 ein verlängertes durchgehendes Modul a', bei dem der Spalt 5' ein spulenfreier Abschnitt des durchgehenden Moduls a' ist. Darüber hinaus ist zwischen den Modulen a', b' ein Spalt 5 vorgesehen, der wie bei der Ausgestaltung der Fig. 1 ein einfacher Luftspalt ist. Der erfindungsgemäße Linear-Synchronmotor kann insbesondere für eine Magnetschwebebahn oder einen Aufzug innerhalb eines Gebäudes eingesetzt werden.

**Patentansprüche**

1. Linear-Synchronmotor mit einem Spulenwicklungen (S) aufweisenden Langstator (1) und einem Läufer (2), der in Längsrichtung (x) des Linear-Synchronmotors eine Vielzahl von aufeinanderfolgenden Magneten (3) aufweist, wobei der Langstator (1) aus einer Vielzahl von Langstatorabschnitten (4) gebildet ist, die jeweils mehrere in Längsrichtung (x) aufeinanderfolgende Spulenwicklungen (S) aufweisen und durch Spalte (5, 5') voneinander getrennt sind, wobei über eine Vielzahl von aufeinanderfolgenden Langstatorabschnitten (4) die Gesamtlänge $L_G$ von jeweils einem Langstatorabschnitt (4) und einem daran angrenzenden Spalt (5, 5') konstant ist, und wobei die über sämtliche Magnete (3) des Läufers (2) in Längsrichtung (x) gemessene Länge $L_L$ ein ganzzahliges Vielfaches der Gesamtlänge $L_G$ ist, **dadurch gekennzeichnet, dass** die aufeinanderfolgenden Magnete (3) bezüglich ihrer jeweiligen Mitte einen Abstand $L_M$ aufweisen, wobei die Spalte (5, 5') zwischen den aufeinanderfolgenden Langstatorabschnitten (4) kleiner als die Hälfte des Abstandes der aufeinanderfolgenden Magnete (3) sind.

2. Linear-Synchronmotor nach Anspruch 1, **dadurch gekennzeichnet, dass** die Magnete (3) des Läufers in Längsrichtung (x) gesehen eine abwechselnde Polung aufweisen.

3. Linear-Synchronmotor nach einem der Ansprüche 1 und 2, **dadurch gekennzeichnet, dass** der Läufer (2) eine gerade Zahl an Magneten (3) aufweist.

4. Linear-Synchronmotor nach einem der Ansprüche 1 bis 3, **dadurch gekennzeichnet, dass** die Magnete (3) des Läufers (2) Permanentmagnete sind.

5. Linear-Synchronmotor nach einem der Ansprüche 1 bis 4, **dadurch gekennzeichnet, dass** zumindest ein Teil der Langstatorabschnitte (4) als voneinander getrennte, einzeln montierbare Module (a, b, c) ausgeführt sind.

6. Linear-Synchronmotor nach einem der Ansprüche 1 bis 5, **dadurch gekennzeichnet, dass** der Langstator (1) voneinander getrennte, einzeln montierbare Module (a', b') aufweist, wobei zumindest ein Teil der Module (a') zumindest zwei Langstatorabschnitte (4) mit einem dazwischen angeordneten Spalt (5') aufweist.

7. Verwendung eines Linear-Synchronmotors nach einem der Ansprüche 1 bis 6 für eine Magnetschwebebahn.

8. Verwendung eines Linear-Synchronmotors nach einem der Ansprüche 1 bis 6 für einen Aufzug innerhalb eines Gebäudes.

9. Magnetschwebebahn mit einem Linear-Synchronmotor gem. einem der Ansprüche 1 bis 6, wobei ein Langstator des Linear-Synchronmotors einen Fahrweg der Magnetschwebebahn bildet und wobei ein Läufer des Linear-Synchronmotors Teil eines Magnetschwebefahrzeugs ist.

10. Aufzug mit einem Linear-Synchronmotor gem. einem der Ansprüche 1 bis 6 als Antrieb des Aufzugs.

**Claims**

1. Linear synchronous motor, comprising a long stator (1) comprising coil windings (S) and a runner (2) which has a multiplicity of successive magnets (3) in the longitudinal direction (x) of the linear synchronous motor, wherein the long stator (1) is formed from a multiplicity of long-stator sections (4), each comprising multiple coil windings (S) arranged in succession in the longitudinal direction (x) and which are separated from one another by gaps (5, 5'), wherein, over a multiplicity of successive long-stator sections (4), the overall length $L_G$ of in each case one long-stator section (4) and one adjoining gap (5, 5') is constant, and wherein the length $L_L$ measured over all of the magnets (3) of the runner (2) in the longitudinal direction (x) is an integer multiple of the overall length $L_G$, **characterized in that** the successive magnets (3) have, with respect to their respective center, a spacing $L_M$,

wherein the gaps (5, 5') between the successive long-stator sections (4) are smaller than half of the spacing between the successive magnets (3).

**2.** Linear synchronous motor according to Claim 1 or 2, **characterized in that** the magnets (3) of the runner have alternating polarity as viewed in the longitudinal direction (x).

**3.** Linear synchronous motor according to one of Claims 1 and 2, **characterized in that** the runner (2) has an even number of magnets (3).

**4.** Linear synchronous motor according to one of Claims 1 to 3, **characterized in that** the magnets (3) of the runner (2) are permanent magnets.

**5.** Linear synchronous motor according to one of Claims 1 to 4, **characterized in that** at least some of the long-stator sections (4) are formed as mutually separate, individually installable modules (a, b, c).

**6.** Linear synchronous motor according to one of Claims 1 to 5, **characterized in that** the long stator (1) has mutually separate, individually installable modules (a', b'), wherein at least some of the modules (a') have at least two long-stator sections (4) with a gap (5') arranged in between.

**7.** The use of a linear synchronous motor according to one of Claims 1 to 6 for a magnetic levitation railroad.

**8.** Use of a linear synchronous motor according to one of Claims 1 to 6 for an elevator within a building.

**9.** Magnetic levitation railroad having a linear synchronous motor according to one of Claims 1 to 6, wherein a long stator of the linear synchronous motor forms a route of the magnetic levitation railroad and wherein a runner of the linear synchronous motor is part of a magnetic levitation vehicle.

**10.** Elevator having a linear synchronous motor according to one of Claims 1 to 6 as drive of the elevator.

**Revendications**

**1.** Moteur linéaire synchrone, comprenant :

un stator long (1) présentant des enroulements de bobine (S) et un rotor (2) qui présente, dans la direction longitudinale (x) du moteur linéaire synchrone, une pluralité d'aimants successifs (3), le stator long (1) étant formé d'une pluralité de portions de stator long (4) qui présentent à chaque fois plusieurs enroulements de bobine successifs (S) dans la direction longitudinale (x) et qui sont séparées les unes des autres par des fentes (5, 5'),

la longueur totale $L_G$ d'une portion de stator long respective (4) et d'une fente (5, 5') adjacente à celle-ci étant à chaque fois constante sur une pluralité de portions de stator long successives (4), et

la longueur $L_L$, mesurée dans la direction longitudinale (x) sur tous les aimants (3) du rotor (2), étant un multiple entier de la longueur totale $L_G$, **caractérisé en ce que**

les aimants successifs (3) présentent, par rapport à leurs centres respectifs, un espacement $L_M$,

les fentes (5, 5') entre les portions de stator long successives (4) étant inférieures à la moitié de l'espacement entre les aimants successifs (3).

**2.** Moteur linéaire synchrone selon la revendication 1, **caractérisé en ce que** les aimants (3) du rotor, vus dans la direction longitudinale (x), présentent une polarité alternée.

**3.** Moteur linéaire synchrone selon l'une quelconque des revendications 1 et 2, **caractérisé en ce que** le rotor (2) présente un nombre entier d'aimants (3) .

**4.** Moteur linéaire synchrone selon l'une quelconque des revendications 1 à 3, **caractérisé en ce que** les aimants (3) du rotor (2) sont des aimants permanents.

**5.** Moteur linéaire synchrone selon l'une quelconque des revendications 1 à 4, **caractérisé en ce qu'**au moins une partie des portions de stator long (4) est réalisée sous forme de modules (a, b, c) séparés les uns des autres, pouvant être montés individuellement.

**6.** Moteur linéaire synchrone selon l'une quelconque des revendications 1 à 5, **caractérisé en ce que** le stator long (1) présente des modules (a', b') séparés les uns des autres, pouvant être montés individuellement, au moins une partie des modules (a') présentant au moins deux portions de stator long (4) avec une fente (5') disposée entre elles.

**7.** Utilisation d'un moteur linéaire synchrone selon l'une quelconque des revendications 1 à 6 pour un train à sustentation magnétique.

**8.** Utilisation d'un moteur linéaire synchrone selon l'une quelconque des revendications 1 à 6 pour un ascenseur à l'intérieur d'un bâtiment.

**9.** Train à sustentation magnétique comprenant un moteur linéaire synchrone selon l'une quelconque des revendications 1 à 6, un stator long du moteur linéaire synchrone formant une trajectoire de déplacement du train à sustentation magnétique et un rotor du moteur linéaire synchrone faisant partie d'un véhicule à sustentation magnétique.

10. Ascenseur comprenant un moteur linéaire synchrone selon l'une quelconque des revendications 1 à 6 en tant qu'entraînement d'un ascenseur.

Fig.1

Fig. 2

EP 2 789 082 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1056187 A1
- WO 2009146821 A1
- US 3712240 A
- US 2011062901 A1

**In der Beschreibung aufgeführte Nicht-Patentliteratur**

- *Langstator und einem Läufer aus der Zeitschrift ZEVrail,* Oktober 2003, 10-16